# EUROPÄISCHE PATENTSCHRIFT

(11) **EP 3 515 766 B1**
(45) Veröffentlichungstag und Bekanntmachung des Hinweises auf die Patenterteilung: **10.03.2021**
(21) Anmeldenummer: 17754701.5
(22) Anmeldetag: 16.08.2017
(51) Int. Cl.: B60T 11/18

(54) **BREMSGERÄT FÜR EINE HYDRAULISCHE KRAFTFAHRZEUGBREMSANLAGE**
BRAKE ASSEMBLY FOR A VEHICLE HYDRAULIC BRAKE SYSTEM
ENSEMBLE DE FREIN POUR UN SYSTÈME DE FREINAGE D'UN VÉHICULE

(30) Priorität: 26.09.2016 DE 102016218421
(43) Veröffentlichungstag der Anmeldung: 31.07.2019
(73) Patentinhaber: Continental Teves AG & Co. OHG, 60488 Frankfurt am Main (DE)
(72) Erfinder: BISCHOFF, Andreas, 60437 Frankfurt am Main (DE); COLASANTA, Jefferson, 65719 Hofheim am Taunus (DE); IBANEZ, Marc, 60596 Frankfurt am Main (DE); RÜFFER, Manfred, 65843 Sulzbach (DE); SELLINGER, Thomas, 63303 Dreieich (DE)
(74) Vertreter: Continental Corporation
(86) Internationale Anmeldenummer: PCT/EP2017/070755
(87) Internationale Veröffentlichungsnummer: WO 2018/054619

(56) Entgegenhaltungen:
- WO-A1-2015/189061
- DE-A1-102009 047 263
- DE-A1-102011 086 527
- DE-C1- 19 610 834

## Beschreibung

Die Erfindung betrifft ein Bremsgerät für eine hydraulische Kraftfahrzeugbremsanlage nach dem Oberbegriff des Anspruchs 1. Die weit verbreiteten konventionellen Bremsgeräte mit einem Unterdruckverstärkers weisen konzeptbedingt eine recht hohe Eigendämpfung, die sich unter anderem in einer charakteristischen "weichen" Rückmeldung am Bremspedal mit einer begrenzten Pedallöse - beziehungsweise Rücklaufgeschwindigkeit und einem leisen Anschlaggeräusch führt und als solche im Markt etabliert und damit erwünscht ist.
Bedingt durch zunehmende Automatisierung der Fahrzeugsteuerung, darunter auch der Bremsensteuerung, aber auch den Wunsch nach Bauraumeinsparung, gewinnen fremdansteuerbare Bremsgeräte mit deutlich kleiner bauenden elektrohydraulischen, elektromechanischen und dergleichen Verstärkerstufen eine zunehmende Verbreitung.

Fremdansteuerbare Bremsgeräte benötigen für die zuverlässige Ansteuerung, Kalibrierung und Wegerfassung des Fahrerwunsches die Kenntnis über die exakte relative Position eines den Bremsdruck aufbauenden Zylinderkolbens in seiner unbetätigten Ausgangslage - den Null- oder Referenzpunkt.

Um den Aufwand für eine komplexe Sensierung und räumliche Kalibrierung zu vermeiden, ist es bekannt, einen ortsfesten mechanischen Anschlag für den Zylinderkolben vorzusehen, welcher den vorgenannten Nullpunkt definiert und als Messursprung für die elektronischen Steuerungssysteme dient.

Die unterdruckverstärkerlosen Aggregate weisen jedoch im Unterschied zu einem konventionellen Bremsgerät konzeptbeding eine eher geringe Eigendämpfung. Dies führt dazu, dass es beispielsweise bei schnellem Losen des Bremspedals nach einer Bremsung zu einer hohen Rücklaufgeschwindigkeit des Zylinderkolbens mit den daran gekoppelten massiven mechanischen Betätigungskomponenten wie beispielsweise Betätigungsstange und Bremspedal kommt, wodurch beim Auftreffen auf den mechanischen Anschlag ein Anschlaggeräusch entsteht, welches als störend empfunden werden kann.

Aus DE 10 2011 086527 A1 ist ein Bremsgerät bekannt, bei welchem die Betätigungsstange in einem gesonderten Simulatorkolben fixiert ist, welcher von einem Hauptzylinderkolben in Betätigungsrichtung über eine dazwischen eingeklemmte Spiralfeder entkoppelt ist. Ein derartiger Aufbau sieht jedoch weder eine Anschlagdämpfung noch eine gezielte Entkopplung in die entgegengesetzte Löserichtung vor.

Es stellt sich somit eine Aufgabe, ein verbessertes unterdruckverstärkerloses Bremsgerät anzubieten, das eine einfache und zuverlässige Erfassung vom Nullpunkt ermöglicht und gleichzeitig eine verringerte Geräuschemission im Rücklauf aufweist.

Die Aufgabe wird erfindungsgemäß durch ein Bremsgerät mit Merkmalskombination nach Anspruch 1 gelöst. Unteransprüche geben weitere vorteilhafte Ausführungen und Weiterbildungen der Erfindung an.

Die Erfindung sieht vor, dass ein Dämpfungselement vorgesehen ist, welches durch eine reversible Deformation eine mechanische Entkopplung□□der Betätigungsstangeneinheit von dem Zylinderkolben in eine, der Betätigungsrichtung entgegengesetzte Löserichtung ermöglicht.
Dadurch wird ein definiertes Überschwingen des Pedals nach dem eigentlichen Kolbenanschlag beim schnellen Rückhub ermöglicht, ohne dass die gesamte Ruckstellenergie durch einen geräuschintensiven, harten mechanischen Anschlag abrupt aufgenommen werden muss.
Gemäß einer bevorzugten Weiterbildung kann das Dämpfungselement dabei platzsparend und mechanisch geschützt in dem Zylinderkolben lagegesichert angeordnet werden.
Zwecks einer vereinfachten Handhabung und kosteneffektiver Herstellung sieht eine bevorzugte erfindungsgemäße Ausführung vor, dass das Dämpfungselement als ein zumindest in axiale Richtung elastisch verformbares Feststoffelement ausgebildet ist.
Gemäß einer besonders vorteilhaften Weiterbildung kann das Dämpfungselement aus einem Elastomerwerkstoff ausgebildet werden, wodurch ein besonders hoher Anteil der eingeleiteten Kräfte in Wärme umgewandelt wird und zugleich geringere Maßtoleranzen erforderlich werden.
Innerhalb der Erfindung können jedoch auch andere, insbesondere metallische, mechanische Dämpfung- und Federelemente wie beispielsweise Tellerfeder, Ringfeder, Blattfeder und dergleichen verwendet werden.
Die Erfindung sieht weiter vor, dass die Betätigungsstangeneinheit in dem Zylinderkolben zu dem Zylinderkolben in Löserichtung unter Herbeiführung von Deformation des Dämpfungselements axial begrenzt verschiebbar aufgenommen ist.
Dadurch kann die Betätigungsstangeneinheit beim Zurückstellen die Relativbewegung zur Energieabbau raumsparend im Zylinderkolben durchführen.
In einer bevorzugten erfindungsgemäßen Ausführung ist die Betätigungsstangeneinheit wenigstens zweiteilig mit einer Betätigungsstange und einem am zylinderkolbenseitigen Ende der Betätigungsstange kippbar sowie verschiebefest angeordneten Passstück aufgebaut, wobei an dem Passstück eine Frontfläche zur Einleitung von Betätigungskräften in Betätigungsrichtung in den Zylinderkolbe und eine Rückfläche zur Einleitung von Trägheitskräften aus der Betätigungsstange in Löserichtung in das Dämpfungselement ausgebildet sind. Des Weiteren wird vorgeschlagen dass das Dämpfungselement zu Lagesicherung des Passstücks im Zylinderkolben verwendet ist, wodurch die Komponentenanzahl und Raumbedarf klein gehalten werden können, zugleich wird der Kraftfluß verbessert Toleranzketten weitgehend reduziert.
Gemäß einer ersten erfindungsgemäßen Ausführung wird das Dämpfungselement durch ein demontierbares Sicherungselement wie beispielsweise Sicherungsring, Runddrahtsprengring und dergleichen axial positioniert und lagegesichert, wodurch eine reparaturfreundliche Lösung mit einer vereinfachten Montage ohne komplexe Werkzeuge und Spezialvorrichtungen realisiert werden kann.
Als eine besonders einfache und herstellungseffektive Lösung wird erfindungsgemäße vorgeschlagen, dass in dem Zylinderkolben eine Radialinnennut zur Aufnahme des Sicherungselements ausgebildet ist. Damit wird die axiale Lage der im Zylinderkolben eingeklemmten Passstücks und des Dämpfungselements zwangsweise, gleichzeitig und eindeutig durch die Montage festgelegt, Montagefehler werden reduziert.

Gemäß einer zweiten erfindungsgemäßen Ausführung kann das Dämpfungselement jedoch durch plastische Verformung eines Bereichs des Zylinderkolbens wie etwa Verstemmen, Einscheren, Clinchen und dergleichen lagegesichert werden.

Dadurch kann eine besonders stabile Lösung mit besonders hohen Sicherheitsreserven realisiert werden.

Weitere Merkmale und Vorteile der Erfindung ergeben sich aus der nachfolgenden Beschreibung eines erfindungsgemäßen Ausführungsbeispiels. Nachstehend zeigten:
- Fig.1: eine Teilansicht einer ersten erfindungsgemäßen Ausführungsform des verbesserten Bremsgeräts in Längsschnitt.
- Fig.2: eine vergrößerte Ansicht eines Bereiches der Ausführungsform nach Fig.1 mit dem Dämpfungselement.
- Fig.3: eine vergrößerte Ansicht der Bereiches mit dem Dämpfungselement einer anderen erfindungsgemäßen Ausführungsform.

Fig.1
Das Erfindungsgemäße Bremsgerät 1 weist ein mehrteiliges Gehäuse 2 auf, in dem eine mit einer Bremsflüssigkeit gefüllte Druckkammer 3 eingerichtet ist. Die Druckkammer 3 ist (hier nicht gezeigt) hydraulisch mit einem Simulator oder zum Erzeugen von Bremsdruck mit wenigstens einer Radbremse verbunden.
Von einer Seite ist die Druckkammer 3 durch einen mittels einer Betätigungsstangeneinheit 6 in Betätigungsrichtung B axial versetzbaren Zylinderkolben 4 begrenzt.

Der Zylinderkolben 4 ist hier in seiner unbetätigten Ausgangstellung abgebildet und liegt an einem gehäusefesten starren Anschlag 14 an. Der Anschlag 14 definiert somit stets die unbetätigte Ausgangslage beziehungsweise die Nulllage des Zylinderkolbens 4.

Die Betätigungsstangeneinheit 6 ist an ein hier nicht gezeigtes Bremspedal gekoppelt. Bei einer Betätigung des Zylinderkolbens 4 mittels des Bremspedals beziehungsweise Betätigungsstangeneinheit 6 wird eine zwischen der Betätigungsstange 5 und dem Gehäuse 2 eingespannte Rückstellfeder 15 komprimiert, welche nach dem Lösen der Bremse den Rücklauf der mechanischen Komponenten in Löserichtung L in ihre jeweiligen unbetätigten Ausgangspositionen unterstützt.

Nach dem Beenden eines Bremsvorgangs und dem Lösen der Bremse - beispielsweise durch das entfernen des Fußes vom Bremspedal, wird der Zylinderkolben 4 in Löserichtung L, zusammen mit der Betätigungsstangeneinheit 6 und dem Bremspedal durch die darauf wirkenden Feder- und Hydraulikkräfte solange beschleunigt versetzt, bis der Zylinderkolben 4 mit seinem rückwärtigen Rand auf den Anschlag 14 auftrifft.

Die bewegten Massen der Betätigungsstangeneinheit 6 mit dem daran gekoppelten Bremspedal werden führen zum Aufbau von Trägheitskräften, die beim abrupten anhalten des Zylinderkolbens 4 bei seinem Auftreffen auf den Anschlag 14 in den Zylinderkolben 4 eingeleitet werden.

Im Kraftfluß aus der Betätigungsstangeneinheit 6 in den Zylinderkolben 4 in Löserichtung L ist zwischen der Betätigungsstangeneinheit 6 und dem Zylinderkolben 4 ein unter Aufbau einer Vorspannkraft reversibel deformierbares Dämpfungselement 7 geschaltet, dass sich erst beim Aufschlag des Zylinderkolbens 4 am Anschlag 14 in axiale Richtung verformt. Dadurch entkoppelt sich die Betätigungsstangeneinheit 6 temporär von dem Zylinderkolben 4 und verschiebt sich relativ zu diesem geringfügig weiter in Löserichtung L, während der Zylinderkolben 4 in seiner Nulllage verbleibt. Nach Abbau der überschüssigen Energie versetzt sich die Betätigungsstangeneinheit 6, getrieben durch die im Dämpfungselement 7 aufgebaute Vorspannkraft in Betätigungsrichtung B in ihre gezeigte, unbetätigte Ausgangslage.
Durch die Deformation des Dämpfungselements 7 werden darin die eingeleiteten Kräfte teilweise in Wärme umgewandelt und lediglich zu einem reduzierten Teil weiter an den Zylinderkolben 4 und das Gehäuse 2 weitergegeben. Dadurch reduzieren sich die gesamte auf den Anschlag 14 einwirkende Aufprallenergie und die daraus bedingten Schallemissionen. Das Anschlaggeräusch wird verringert. Das Dämpfungselement 7 ist in der gezeigten Ausführungsform als ein elastomeres Ringelement ausgebildet, welches lagegesichert im Zylinderkolben 4 positioniert ist. Innerhalb der Erfindung sind auch andere reversibel deformierbare Komponenten ebenso beinhaltet, wie beispielsweise Metallfederelemente.

Fig.2

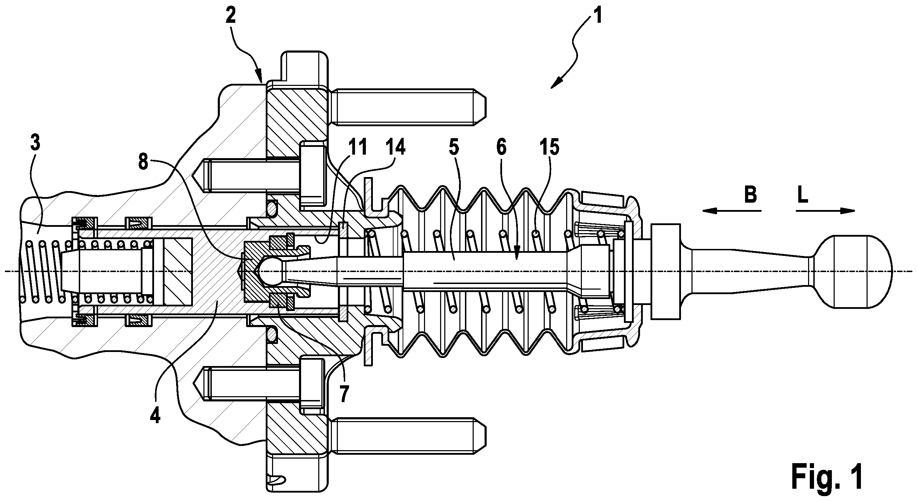

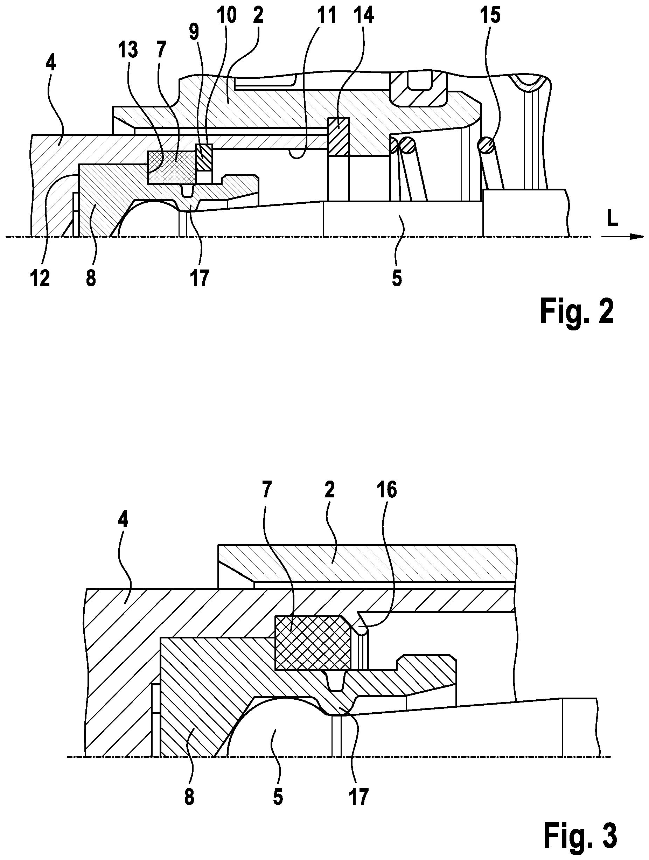

In der Fig.2 ist der Bereich um das Dämpfungselement 7 der erfindungsgemäßen Ausführung nach Fig.1 vergrößert dargestellt.

Die Betätigungsstangeneinheit 6 ist in der gezeigten Ausführungsform mehrteilig ausgebildet. Sie umfasst eine im Wesentlichen stiftförmige Betätigungsstange 5 und ein am ihren zylinderkolbenseitigen Ende fixiertes Passstück 8, welches im Wesentlichen der Optimierung der Kraftübertragung aus der Betätigungsstange 5 in der Zylinderkolben 4 dient und gleichzeitig einen Winkelausgleich der Betätigungsstange 5 ermöglicht. In der gezeigten Ausführungsform ist das Passstück 8 durch das Verstemmen mittels mehreren umfänglich verteilten Einprägungen 17 hinter dem kugelköpfigen Ende der Betätigungsstange 5 mit dieser verbunden, wodurch es kippbar und axial verschiebefest mit dieser fixiert ist.

Das Passstück 8 ist in eine in dem Zylinderkolben 4 ausgebildeten Stufenbohrung 11 eingefügt und stützt sich in Löserichtung L gegen das Dämpfungselement 7. Das Dämpfungselement 7 ebenfalls innerhalb der Stufenbohrung 11 in dem Zylinderkolben 4 angeordnet und mittels eines Sicherungselements 9 axial in Löserichtung L lagegesichert. Damit ist Passstück 8 durch das Dämpfungselement 7 in dem Zylinderkolben 4 in einer kraftübertragenden Verbindung verliersicher gehalten.

Das Sicherungselement 9 ist in der gezeigten Ausführung als ein in eine Radialinnennut 10 eingesetzter Sicherungsring ausgebildet und ist durch diese Ausführung sowohl montierbar als auch demontierbar.
Zur Einleitung von Betätigungskräften in Betätigungsrichtung B in den Zylinderkolben 4 ist an dem Passstück 8 eine plane, scheibenförmige Frontfläche 12 vorgesehen. Eine ringförmige Rückfläche 13 dient zur Einleitung von Kräften aus der Betätigungsstange 5 in Löserichtung L in das Dämpfungselement 7.

Fig.3
In der Fig.3 ist eine andere erfindungsgemäße Ausführungsform des Bremsgeräts 1 abgebildet. Im Unterschied zu der vorstehend beschriebenen Ausführung ist das Dämpfungselement 7 und somit auch das Passstück 8 in dem Zylinderkolben 4 nicht durch ein demontierbares Sicherungselement 9, sondern durch einen plastisch verformten Bereich 16 des Zylinderkolbens 4 axial fixiert.

### Bezugszeichen:

- 1: Bremsgerät
- 2: Gehäuse
- 3: Druckkammer
- 4: Zylinderkolben
- 5: Betätigungsstange
- 6: Betätigungsstangeneinheit
- 7: Dämpfungselement
- 8: Passstück
- 9: Sicherungselement
- 10: Radialinnennut
- 11: Stufenbohrung
- 12: Frontfläche
- 13: Rückfläche
- 14: Anschlag
- 15: Rückstellfeder
- 16: Bereich
- 17: Einprägung
- B: Betätigungsrichtung
- L: Löserichtung

## Patentansprüche

1. Bremsgerät (1) für eine unterdruckverstärkerlose hydraulische Kraftfahrzeugbremsanlage, mit einem Gehäuse (2) mit wenigstens einer darin angeordneten Druckkammer (3), mit einem Zylinderkolben (4), welcher mittels einer mit dem Zylinderkolben (4) gekoppelten Betätigungsstangeneinheit (6) in eine Betätigungsrichtung (B) axial versetzbar ist, wobei für den Zylinderkolben (4) ein starrer Anschlag (14) vorgesehen ist, welcher die unbetätigte Ausgangsposition des Zylinderkolbens (4) definiert, **dadurch gekennzeichnet, dass** ein Dämpfungselement (7) vorgesehen ist, welches durch eine reversible Deformation eine mechanische Entkopplung der Betätigungsstangeneinheit (6) von dem Zylinderkolben (4) in eine, der Betätigungsrichtung (B) entgegengesetzte Löserichtung (L) ermöglicht, wobei das Dämpfungselement (7) in dem Zylinderkolben (4) lagegesichert angeordnet ist.

2. Bremsgerät (1) nach Anspruch 1 **dadurch gekennzeichnet, dass** das Dämpfungselement (7) als ein zumindest in axiale Richtung elastisch verformbares Feststoffelement ausgebildet ist.

3. Bremsgerät (1) nach wenigstens einem der vorstehenden Ansprüche
**dadurch gekennzeichnet, dass** die Betätigungsstangeneinheit (6) in dem Zylinderkolben (4) zu dem Zylinderkolben (4) in Löserichtung (L) unter Herbeiführung von Deformation des Dämpfungselements (7) axial begrenzt verschiebbar aufgenommen ist.

4. Bremsgerät (1) nach wenigstens einem der vorstehenden Ansprüche
**dadurch gekennzeichnet, dass** die Betätigungsstangeneinheit (6) wenigstens zweiteilig mit einer Betätigungsstange (5) und einem am zylinderkolbenseitigen Ende der Betätigungsstange (5) kippbar sowie verschiebefest angeordneten Passstück (8) aufgebaut ist, wobei an dem Passstück (8) eine Frontfläche (12) zur Einleitung von Betätigungskräften in Betätigungsrichtung (B) in den Zylinderkolben (4) und eine Rückfläche (13) zur Einleitung von Kräften aus der Betätigungsstange (5) in Löserichtung (L) in das Dämpfungselement (7) ausgebildet sind.

5. Bremsgerät (1) nach wenigstens einem der Ansprüche 1 bis 4 **dadurch gekennzeichnet, dass** das Dämpfungselement (7) durch ein demontierbares Sicherungselement (9) lagegesichert ist.

6. Bremsgerät (1) nach Anspruch 5 **dadurch gekennzeichnet, dass** in dem Zylinderkolben (4) eine Radialinnennut (10) zur Aufnahme des Sicherungselements (9) ausgebildet ist.

7. Bremsgerät (1) nach wenigstens einem der Ansprüche 1 bis 4 **dadurch gekennzeichnet, dass** das das Dämpfungselement (7) durch plastische Verformung eines Bereichs (16) des Zylinderkolbens (4) lagegesichert ist.

8. Bremsgerät (1) nach wenigstens einem der Ansprüche 4 bis 7 **dadurch gekennzeichnet, dass** das Dämpfungselement (7) zu Lagesicherung des Passstücks (8) im Zylinderkolben (4) verwendet ist.

9. Bremsgerät (1) nach wenigstens einem der Ansprüche 2 bis 8 **dadurch gekennzeichnet, dass** das Dämpfungselement (7) aus einem Elastomerwerkstoff ausgebildet ist.

## Claims

1. Brake device (1) for a hydraulic motor vehicle brake system without a vacuum booster, with a housing (2) with at least one pressure chamber (3) arranged therein, with a cylinder piston (4) which can be axially moved in an actuation direction (B) by means of an actuating rod unit (6) coupled to the cylinder piston (4), wherein, for the cylinder piston (4), there is provided a rigid stop (14) which defines the non-actuated starting position of the cylinder piston (4), **characterized in that** a damping element (7) is provided which, by means of a reversible deformation, permits a mechanical decoupling of the actuating rod unit (6) from the cylinder piston (4) in a release direction (L) which is opposite to the actuation direction (B), wherein the damping element (7) is positionally secured in the cylinder piston (4) .

2. Brake device (1) according to Claim 1, **characterized in that** the damping element (7) is configured as a solid element which is elastically deformable at least in the axial direction.

3. Brake device (1) according to at least one of the preceding claims, **characterized in that** the actuating rod unit (6) is received in the cylinder piston (4) so as to be axially limitedly movable relative to the cylinder piston (4) in the release direction (L), causing deformation of the damping element (7).

4. Brake device (1) according to at least one of the preceding claims, **characterized in that** the actuating rod unit (6) is of at least two-part construction with an actuating rod (5) and with a fitting piece (8) which is arranged in tiltable and non-displaceable fashion on an end of the actuating rod (5) on the cylinder piston side, wherein, on the fitting piece (8), there are formed a front face (12), for the introduction of actuation forces into the cylinder piston (4) in the actuation direction (B), and a rear face (13), for the introduction of forces from the actuating rod (5) into the damping element (7) in the release direction (L).

5. Brake device (1) according to at least one of Claims 1 to 4, **characterized in that** the damping element (7) is positionally secured by a removable locking element (9).

6. Brake device (1) according to Claim 5, **characterized in that** a radially inner groove (10) is formed in the cylinder piston (4) for the purposes of receiving the locking element (9).

7. Brake device (1) according to at least one of Claims 1 to 4, **characterized in that** the damping element (7) is positionally secured by plastic deformation of a region (16) of the cylinder piston (4).

8. Brake device (1) according to at least one of Claims 4 to 7, **characterized in that** the damping element (7) is used to positionally secure the fitting piece (8) in the cylinder piston (4).

9. Brake device (1) according to at least one of Claims 2 to 8, **characterized in that** the damping element (7) is made from an elastomer material.

## Revendications

1. Dispositif de freinage (1) destiné à une installation de freinage de véhicule automobile hydraulique sans servofrein à dépression, le dispositif de freinage comprenant un boîtier (2) pourvu d'au moins une chambre de pression (3) disposée à l'intérieur d'un piston de cylindre (4) qui peut être déplacé axialement dans un sens d'actionnement (B) au moyen d'une unité formant tige d'actionnement (6) accouplée au piston de cylindre (4), une butée rigide (14) étant prévue pour le piston de cylindre (4) et définissant la position de départ non actionnée du piston de cylindre (4), **caractérisé en ce qu'**un élément d'amortissement (7) est prévu qui permet, par une déformation réversible, de désaccoupler mécaniquement l'unité formant tige d'actionnement (6) du piston de cylindre (4) dans un sens de libération (L) opposé au sens d'actionnement (B), l'élément d'amortissement (7) étant disposé de manière fixe en position dans le piston de cylindre (4) .

2. Dispositif de freinage (1) selon la revendication 1, **caractérisé en ce que** l'élément d'amortissement (7) est conçu sous la forme d'un élément plein déformable élastiquement au moins dans la direction axiale.

3. Dispositif de freinage (1) selon l'une au moins des revendications précédentes, **caractérisé en ce que** l'unité formant tige d'actionnement (6) est reçue dans le piston de cylindre (4) de façon à pouvoir effectuer un coulissement axial limité par rapport au piston de cylindre (4) dans le sens de libération (L) en causant une déformation de l'élément d'amortissement (7).

4. Dispositif de freinage (1) selon l'une au moins des revendications précédentes, **caractérisé en ce que** l'unité formant tige d'actionnement (6) est réalisée en au moins deux parties avec une tige d'actionnement (5) et une pièce d'ajustement (8) disposée de manière inclinable et sans pouvoir coulisser à l'extrémité côté piston de cylindre de la tige d'actionnement (5), une surface avant (12) étant formée sur la pièce d'ajustement (8) pour introduire, dans le sens d'actionnement (B), des forces d'actionnement dans le piston de vérin (4) et une surface arrière (13) étant formée sur la pièce d'ajustement (8) pour introduire, dans le sens de libération (L), des forces dirigées de la tige d'actionnement (5) dans l'élément d'amortissement (7).

5. Dispositif de freinage (1) selon l'une au moins des revendications 1 à 4, **caractérisé en ce que** l'élément d'amortissement (7) est fixé en position par un élément de fixation démontable (9).

6. Dispositif de freinage (1) selon la revendication 5, **caractérisé en ce qu'**une rainure intérieure radiale (10), destinée à recevoir l'élément de fixation (9), est ménagée dans le piston de cylindre (4).

7. Dispositif de freinage (1) selon l'une au moins des revendications 1 à 4, **caractérisé en ce que** l'élément d'amortissement (7) est fixé en position par déformation plastique d'une région (16) du piston de cylindre (4).

8. Dispositif de freinage (1) selon l'une au moins des revendications 4 à 7, **caractérisé en ce que** l'élément d'amortissement (7) est utilisé pour fixer la position de la pièce d'adaptation (8) dans le piston de cylindre (4).

9. Dispositif de freinage (1) selon l'une au moins des revendications 2 à 8, **caractérisé en ce que** l'élément d'amortissement (7) est réalisé à partir d'un matériau élastomère.
